# EUROPÄISCHE PATENTSCHRIFT

(11) **EP 3 004 003 B1**
(45) Veröffentlichungstag und Bekanntmachung des Hinweises auf die Patenterteilung: **12.08.2020**
(21) Anmeldenummer: 14730790.4
(22) Anmeldetag: 30.05.2014
(51) Int. Cl.: C03C 3/089, C03C 3/093, C03C 4/08, C03B 29/02

(54) **VERFAHREN ZUM HERSTELLEN EINES GLASPRODUKTS AUS UV-SCHUTZGLAS, DAMIT HERSTELLBARES GLAS UND VERWENDUNGEN DESSELBEN**
METHOD FOR PRODUCING A GLASS PRODUCT COMPOSED OF UV-PROTECTION GLASS, GLASS THAT CAN BE PRODUCED BY MEANS OF SAID METHOD, AND USES OF SAID GLASS
PROCÉDÉ PERMETTANT DE FABRIQUER UN PRODUIT EN VERRE À PARTIR DE VERRE ANTI-UV, VERRE POUVANT ÊTRE AINSI FABRIQUÉ ET UTILISATIONS DE CE DERNIER

(30) Priorität: 31.05.2013 DE 102013105643
(43) Veröffentlichungstag der Anmeldung: 13.04.2016
(73) Patentinhaber: Meindl Beratungs - und Beteiligungs GmbH, 97199 Ochsenfurt (DE)
(72) Erfinder: MEINDL, Hans Reiner, 97199 Ochsenfurt (DE); BURGER, Gerald, 95666 Mitterteich (DE); DREXLER, Hubert, 92224 Amberg (DE)
(74) Vertreter: Kastel, Stefan
(86) Internationale Anmeldenummer: PCT/EP2014/061287
(87) Internationale Veröffentlichungsnummer: WO 2014/191564

(56) Entgegenhaltungen:
- DE-A1- 1 596 981
- SU-A1- 1 643 488
- SU-A1- 1 669 881

## Beschreibung

Die Erfindung betrifft ein Verfahren zum Herstellen eines Glasprodukts aus UV-Schutzglas sowie Verwendungen eines solchen Glasprodukts. Außerdem betrifft die Erfindung ein mit einem solchen Verfahren herstellbares Glasprodukt sowie Verwendungen desselben.

Aus der SU 1669881 A1 ist ein rotes Glas für lichttechnische Glaserzeugnisse mit der folgenden Zusammensetzung (in Gew.-%) bekannt: SiO₂ 65,0-71,0; ZnO 7,0-12,0; CaO 1,0-5,0; MgO 0,01-3,0; B₂O₃ 2,0-10,5; Al₂O₃ 0,01-3,0; CdO 0,3-1,6; Se 0,2-1,0; S 0,1-1,0; Na₂O 6,0-12,0 K₂O 4,0-10,0; LiO₂ 0,001-0,2 und F 0,0001-0,4.

Aus der SU 1643488A1 ist ein Glas für Glasfilter zur Verwendung als farbige optische Gläser bekannt mit der folgenden Zusammensetzung (in Gew.-%) bekannt: SiO₂ 61,47-63,36; B₂O₃ 2,85-2,97; ZnO 12,5-12,87; K₂O 10,56-10,89; Na₂O 8,56-8,91; CdS 0,29-0,30; Se 0,14-0,15; S 0,04-0,05 Yb₂O₃ 0,50-3,50.

Aus der DE 15 96 981 A ist ein Steilkanten-Anlaufgelbglas zur Verwendung als Signalglas bekannt.

Während sich der vorgenannte Stand der Technik auf farbige Gläser für lichttechnische Glasfilter bezieht, findet die Erfindung insbesondere in der Denkmalpflege, zur Verglasung von Museen, für Vitrinen und in Fenstern von - insbesondere historischen - Gebäuden mit lichtempfindlichem Inneren Verwendung.

Ein Problem, dem sich die Erfindung zuwendet, liegt bei der Wirkung von UV-Licht auf organische und anorganische Stoffe. UV-Licht beschleunigt den Alterungsprozess und führt z.B. bei Papier, Holz, Textilien, Tapeten, Malereien, Kunstgegenständen, Relikten, historischen Gegenständen usw. zu Vergilbung und Nachdunklung. Um diese Effekte zu vermeiden, werden zum Schutz vor dem UV-Spektrum der Sonneneinstrahlung Verdunklungssysteme in Fenstern eingesetzt. Diese Systeme gehen von vollständiger Verdunklung - z.B. mittels Fensterläden und Rollläden - über Vorhänge zu UV-Schutzgläsern.

Beispielsweise werden Räume in Museen, Schlössern oder sonstigen historischen Gebäuden, welche besonders wertvolle Inhalte wie Gemälde, Malereien, Wandteppiche usw. aufweisen, vollständig im Dunkeln gehalten, so dass Besucher nur mit Kunstlicht vorliebnehmen müssen.

Eine mögliche Lösung wäre, das UV-Spektrum der Sonne herauszufiltern. Hierzu gibt es UV-Schutz-Gläser auf dem Markt, die in der Regel aus einem Floatglas-Folie-Floatglas-Aufbau bestehen. Die UV-Schutz-Wirkung wird durch die Eigenschaften der Folie erreicht. Solche UV-Gläser sind kompliziert im Aufbau, und die Folie ist Alterungsprozessen unterworfen. Individuelle Lösungen, wie sie durch den Denkmalschutz vorgeschrieben werden, sind mit diesen derzeit auf dem Markt befindlichen Gläsern schwer erreichbar.

In der Patentliteratur findet sich bereits eine Reihe von Gläsern mit UVabsorbierender Wirkung. Diese Gläser werden allerdings für andere technische Gebiete wie insbesondere optische Geräte und Fotografiezwecke erstellt und sind für die hier in Rede stehenden Zwecke kaum geeignet. Aus der umfangreichen Patentliteratur zu solchen UV-absorbierenden Gläsern wird als nächstliegender Stand der Technik die DE 101 41 105 C1 genannt.

Ein Hauptproblem bei diesen UV-absorbierenden Gläsern ist die unzureichende Farbneutralität im sichtbaren Bereich; insbesondere weisen die bisher bekannten UV-absorbierenden Gläser eine für Denkmalpflege ungeeignete Verfärbung, z.B. einen erheblichen Gelbstich, auf. In der DE 101 41 105 C1 ist explizit ein Farbglas genannt. Es wird als Spektralfilter in technischen Geräten genutzt.

Aufgabe der Erfindung ist es, eine Möglichkeit zur Beobachtung von empfindlichen Objekten mit natürlichem Licht oder die Versorgung von Räumen mit wertvollem, UV-empfindlichem Inhalt mit natürlichem Licht unter Berücksichtigung der Belange der Denkmalpflege zu schaffen.

Zum Lösen dieser Aufgabe wird ein Verfahren zum Herstellen eines Glasprodukts gemäß Anspruch 1 vorgeschlagen. Vorteilhafte Verwendungen eines mit einem solchen Verfahren erhältlichen oder hergestellten Glasprodukts sind in Anspruch 8 angegeben. Ein mit dem Verfahren erhältliches Glasprodukt sowie vorteilhafte Verwendungen dafür sind in den Ansprüchen 9 und 10 angegeben.

Vorteilhafte Ausgestaltungen der Erfindung sind Gegenstand der Unteransprüche.

Die Erfindung schafft gemäß einem ersten Aspekt ein Verfahren zum Herstellen eines Glasprodukts aus UV-absorbierendem Glas mit den Schritten:
a) Herstellen einer UV-Schutzglas-Schmelze enthaltend:

| | | |
|---|---|---|
| SiO₂ | 55 - 75 | Gew.-% |
| Na₂O | 0 - 18 | Gew.-% |
| CaO | 0 - 10 | Gew.-% |
| K₂O | 5 - 15 | Gew.-% |
| B₂O₃ | 1 - 7 | Gew.-% |
| CdS | 0,05 - 0,5 | Gew.-% |
| ZnS | 0,1 - 0,4 | Gew.-% |
| ZnO | 4,5 - 12 | Gew.-% |

b) Formen des Glasprodukts,
c) Temperieren des Glasprodukts für eine Zeit t bei einer Temperatur T, wobei gilt: 540°C ≤ T ≤ 750°C und 1h ≤ t ≤ 50h.

Es ist bevorzugt, dass in Schritt b) das Glasprodukt massiv aus der in Schritt a) hergestellten Schmelze geformt wird.

Es ist bevorzugt, dass in Schritt b) das Glasprodukt aus Überfangglas mit wenigstens einer Basisglasschicht aus einer Basisglasschmelze ohne UV-absorbierenden Eigenschaften und wenigstens einer UV-Schutzglas-Schicht aus der UV-Schutzglasschmelze geformt wird.

Es ist bevorzugt, dass Schritt b) derart durchgeführt wird, dass die Dicke der UV-Schutzglasschicht mindestens ca. 1,2 mm beträgt und insbesondere zwischen ca. 1,2 mm und 2,2 mm und bevorzugt ca. 1,6 mm beträgt.

Es ist bevorzugt, dass als Basisglas ein farbloses Klarglas, insbesondere ein Kalk-Natron-Glas, und/oder ein Farbglas verwendet werden.

Es ist bevorzugt, dass Schritt b) Mundblasen des Glasprodukts enthält.

Es ist bevorzugt, dass in Schritt b) zunächst eine erste Menge Glas aus der UV-Schutzglasschmelze entnommen und abgekühlt wird und dann über die abgekühlte erste Menge Glas eine zweite Menge Glas aus der UV-Schutzglasschmelze entnommen wird.

Es ist bevorzugt, dass in Schritt b) zunächst eine erste Menge Glas aus der Basisglasschmelze entnommen und abgekühlt wird und dann über die abgekühlte erste Menge Glas aus Basisglas eine zweite Menge Glas aus der UV-Schutzglasschmelze entnommen wird.

Es ist bevorzugt, dass Schritt b) enthält:
1) Formen eines Flachglases, insbesondere in Form einer Glasscheibe oder
2) Ausformen eines Glaszylinders oder einer gebogenen Glasform.

Es ist bevorzugt, dass in Schritt b) mittels Mundblasen zunächst ein Zylinder ausgeformt wird, aus dem ein Flachglas als Glasprodukt geformt wird.

Es ist bevorzugt, dass in Schritt a) die UV-Schutzglasschmelze derart hergestellt wird, dass

a1) 5 - 10 Gew.-%, insbesondere 6 - 10 Gew.-% K₂O enthalten ist.

Es ist bevorzugt, dass in Schritt c) das Glasprodukt für eine Zeit t von 10 h ≤ t ≤ 40 h bei einer Temperatur T mit 580°C ≤ T ≤ 620°C temperiert wird.

Es ist bevorzugt, dass Schritt c) derart erfolgt, dass das Glasprodukt eine Absorptionskante zwischen 390 nm und 450 nm mit einem Fußpunkt (Transmission < 0,1 %) zwischen ca. 380 nm und ca. 420 nm aufweist.

Gemäß einem weiteren Aspekt betrifft die Erfindung eine Verwendung eines durch ein solches Verfahren erhältlichen oder hergestellten Glasprodukts
1) als Bauglas, insbesondere Fensterglas,
2) als Fenster- oder Bauglas in religiösen Bauten, Museen, historischen Gebäuden und/oder in der Denkmalspflege,
3) zum Bau von Vitrinen oder Schaubehältern, insbesondere für Museen oder Ausstellungen, und/oder
4) als Lampenglas.

Ein Gegenstand einer bevorzugten Ausgestaltung liegt darin, durch die Kombination von Zuschlagstoffen (Zinkoxid und Metallsulfiden) und Temperung ein Kalk-Alkali-Silikatglas zu schmelzen, das als Flachglas mit einer Stärke von 2-5 mm bei 400 nm eine steile optische Kante mit einem nahezu 100 %igen UV-Schutz bietet.

Das verwendete Glasgemenge besteht beispielsweise aus

| Bestandteil | Gewichtsanteil kg |
|---|---|
| Sand | 45 - 65 |
| Soda | 5 - 15 |
| Kalk | 5 - 12 |
| Borax | 5 - 13 |
| Zinkoxid | 2 - 8 |
| Zinksulfid | 0,1 - 1 |
| Cadmiumsulfid | 0,1 - 1 |
| Pottasche | 7 - 15 |

Das im Schmelzprozess erzeugte Flachglas wird in einem Temperofen wieder erhitzt und bildet durch gezieltes Wachstum der Kolloide bzw. der CdS/ZnS-Mikrokristallite bei Temperaturen zwischen 560 Grad Celsius und 680 Grad Celsius bei einer Temperdauer zwischen 30 Minuten und 50 Stunden eine UV-Sperre, deren Sperrwirkung über 99,9% liegt.

Ein Vorteil ist, dass das so erzeugte Glas einen Gelbton hat, der geringer ist als bei bzw. nicht über vergleichbaren Foliensystemen liegt.

Neben der höheren Lebensdauer von Glas gegenüber Folien liegt ein weiterer Vorteil in der geringeren Einbaustärke der so hergestellten Glasprodukte (2 bis 4 mm) gegenüber den Foliensystemen (mehr als 4 mm).

Das so hergestellte Glas ist für z.B. die Verglasung von Fenstern und Bildern geeignet.

Ein besonders bevorzugtes Herstellverfahren umfasst das Formen des Glasproduktes, beispielsweise in Form von Scheiben oder Zylindern oder auch in beliebigen anderen Formen, mittels Mundblasen. Mundblasen ist in Glashütten seit mehreren Jahrhunderten bekannt. Die Mundblastechnik ermöglicht eine wirtschaftliche Fertigung auch kleinerer Mengen und individueller Formen. Mundgeblasenes Glas ist insbesondere für Fenster in der Denkmalpflege, beispielsweise in Kirchenfenstern, Museen, historischen Gebäuden, interessant.

Mit dem erfindungsgemäßen Verfahren können nun derartige Gläser mit UV-Schutz versehen werden. Bisher wird bei Fensterglas mit UV-Schutz derart vorgegangen, dass diese Gläser mit speziellen Folien beschichtet werden, die den UV-Schutz liefern. Im Gegensatz hierzu erfolgt dies bei dem erfindungsgemäßen Verfahren durch spezielle Zusammensetzungen des Glases und eine spezielle Temperaturbehandlung. Besonders bevorzugt wird eine Temperung bei einer niedrigen Temperatur, beispielsweise um 580 °C, und dafür eine Verlängerung der Einwirkzeit von z.B. wenigstens 10 Stunden an dem Glasprodukt durchgeführt. Durch die Glaszusammensetzung und das Temperierverfahren kann man gewünschte Absorptionsspektren mit einer scharfen Absorptionskante, beispielsweise bei 400 nm, erreichen.

Besonders bevorzugt wird das Glasprodukt als Überfangglas hergestellt. Überfangglas ist ein Flach- oder Hohlglas, das aus zwei oder mehreren Schichten, von z.B. unterschiedlicher Färbung, besteht. Für Überfangglas existieren verschiedene Herstellungstechniken, z.B. wird Flachglas durch Verschmelzen von Glasbändern aus den unterschiedlichen Gläsern hergestellt, die gleichzeitig aus benachbarten Schmelzwannen gezogen werden. Hohlglas wird durch einfaches Eintauchen der vorne an der Glasmacherpfeife hängenden, nur wenig aufgeblasenen Glasmenge aus einer ersten Glaszusammensetzung in eine zweite Glaszusammensetzung und anschließendes Aufblasen hergestellt.

Bei dem Überfangverfahren zum Herstellen des UV-Schutzglases wird hier zunächst eine Basisglasschmelze aus z.B. klarem (normalem) Natron-Kalk-Glas oder auch aus Farbglas an der Glasmacherpfeife aufgezogen und durch leichtes Abkühlen in einen zäheren Zustand gebracht. Diese Glasmenge wird dann in die UV-Schutzglas-Schmelze eingetaucht, um so eine äußere Schicht aus UV-Schutzglas aufzubringen.

Gemäß einer anderen Ausführungsform wird das Glasprodukt ganz aus der UV-Schutzglas-Schmelze hergestellt, beispielsweise durch zweimaliges Eintauchen der Glasmacherpfeife im Mundblasverfahren, wie dies grundsätzlich gut bekannt ist.

Das Glasprodukt kann unterschiedliche Formen haben. Beispielsweise wird das Glasprodukt als Glasscheibe hergestellt. Im Mundblasverfahren wird hierzu beispielsweise zunächst ein Zylinder hergestellt, der aufgeschnitten und zu einer Glasscheibe aufgeweitet wird. Selbstverständlich kann das Glasprodukt aber auch im Walzglasverfahren hergestellt werden.

Zur UV-Filterung des Glases soll eine möglichst steile Absorptionskante an der Grenze zwischen sichtbarem Licht und UV-Licht erzeugt werden. Es lässt sich hierbei nicht immer eine Herausfilterung von blauem Licht vermeiden, so dass das UV-Schutzglas noch eine entsprechende Gelbfärbung haben kann. Wird nun das Glasprodukt als Überfangglas mit einem Klarglas hergestellt, dann ist nur ein Teil des Glases mit einer noch möglichen Gelbfärbung versehen, so dass die Gelbfärbung weniger intensiv ist.

Versuche haben gezeigt, dass zum Erhalt einer besseren UV-Schutzwirkung die Schichtdicke der UV-Schutzglas-Schicht nicht zu klein sein soll. Hier haben sich Schichtdicken von mindestens 1,2 mm bewährt. Bevorzugt wird eine Schichtdicke von 1,2 mm bis 2,5 mm, insbesondere ca. 1,6 mm.

Eine noch mögliche leichte Gelbfärbung ist für den Denkmalpfleger kein Problem.

Gemäß einer bevorzugten Ausgestaltung der Erfindung wird ein UV-absorbierendes Glas mit einer steilen Absorptionskante im Bereich von 380 nm bis 450 nm und höher und hoher Lichttransmission im sichtbaren Spektralbereich hergestellt. Vorzugsweise wird das Glas auf klassische Weise in einem Hafen-Ofen geschmolzen und zu Glasröhren oder zu Flachglasscheiben ausgearbeitet.

Das UV-absorbierende Glas kann sowohl einphasig als auch in Kombination mit ein oder auch zwei oder auch mehreren anderen Glassorten als sog. Überfangglas hergestellt werden. Bei den zur Kombination verwendeten Gläsern kann es sich um Weißglas und/oder auch um Farbglas handeln.

Bei der Herstellung von Überfanggläsern sollte bei der Materialauswahl möglichst darauf geachtet werden, dass die thermischen Ausdehnungskoeffizienten der verwendeten Glassorten kompatibel sind. Es sollte demnach ein Basisglas verwendet werden, welches einen vergleichbaren thermischen Ausdehnungskoeffizienten wie der Koeffizient des UV-absorbierenden Spezialglases hat. Somit erreicht man, dass im Endprodukt keine Verspannungen vorliegen.

Das mit der Erfindung herstellbare Glasprodukt kann ein Endprodukt, wie z.B. eine Glasröhre, ein Glaszylinder, eine Glasscheibe, eine Flachglasscheibe, eine gebogene Scheibe oder auch ein Glasprodukt beliebiger Form sein. Das Glasprodukt soll insbesondere zur Verglasung von Gebäuden, Vitrinen, Bildern dienen, so dass die durch das Glas geschützten Gegenstände oder Räume möglichst mit natürlichem Licht bestrahlt werden können und/oder in natürlicher Weise ohne merkliche Farbveränderungen betrachtet werden können. Bei einer Variante kann auch Farbglas eingesetzt werden. Beispielsweise können historische farbige Kirchenfenster mit dem UV-absorbierenden Glas unter Verwendung von Farbgläsern nachgearbeitet werden, so dass das Innere der Kirche mit Sonnenlicht ohne UV-Anteil versorgt werden kann.

Die Absorptionskante kann sich zumindest ansatzweise bereits beim Ausarbeiten und Kühlen der Glasartikel bzw. des Glasproduktes entwickeln. Eine besonders steile Absorptionskante entsteht in der Regel aber erst beim nachträglichen Tempern des Glases. Lage und Steigung der Kante sind abhängig von der Glaszusammensetzung sowie von der Temperatur, bei der die Wärmebehandlung erfolgt, und der Zeitdauer der betreffenden Temperaturbehandlung. Über diese Parameter kann die Ausscheidung von Cadmiumsulfid bzw. einer Mischphase aus Cadmium- und Zinksulfid, das die Basis für die UV-absorbierende Wirkung darstellt, gesteuert werden. Lage und Steigung der Absorptionskante können über die Größe der ausgeschiedenen Mikrokristallite sowie über das Mischungsverhältnis von Zinksulfid zu Cadmiumsulfid, d. h. einem partiellen Einbau von Zinksulfid in die primäre Cadmiumsulfidphase, gezielt eingestellt werden. Gemäß einer bevorzugten Ausgestaltung wird demnach ein sog. Anlaufglas hergestellt.

Vorzugsweise wird ein für die Denkmalpflege, für historische Gebäude, für die Verglasung von Bildern, Vitrinen, Fenster für empfindliche Räume usw. verwendbares Glasprodukt hergestellt, das gleichzeitig als optischer Steilkantenfilter wirkt. Optische Steilkantenfilter zeichnen sich durch charakteristische Transmissionseigenschaften aus. Wie bereits in der DE 101 41 105 C1 beschrieben, zeigen Steilkantenfilter mit Langpasscharakteristik im kurzwelligen Bereich eine niedrige Transmission, die über einen schmalen Spektralbereich zu hoher Transmission ansteigt und im Langwelligen hoch bleibt. Der Bereich niedriger Transmission wird als Sperrbereich bezeichnet, der Bereich hoher Transmission als Pass- oder Durchlassbereich.

Auch die hier in Rede stehenden Gläser kann man mit bestimmten Kenngrößen charakterisieren, die für optische Steilkantenfilter verwendet werden. Bei optischen Steilkantenfiltern wird die Absorptionskante üblicherweise als sog. Kantenwellenlänge λ_{C} angegeben. Sie entspricht der Wellenlänge, bei der der spektrale Reintransmissiongrad zwischen Sperr- und Durchlassbereich die Hälfte des Maximalwerts beträgt. Bisher werden optische Steilkantenfilter üblicherweise durch Farbgläser realisiert, in denen durch Ausscheidung von beispielsweise Cadmiumsulfid, Cadmiumselenid und/oder Cadmiumtellurid beim Abkühlen der Schmelze oder durch nachträgliche Wärmebehandlung die Färbung erzeugt wird. Man spricht von sog. Anlaufgläsern. Anders als bei den bekannten Anlaufgläsern wird bei dem mit dem erfindungsgemäßen Verfahren hergestellten Glas jedoch eine weitaus geringere Färbung und eine höhere Transmission sichtbaren Lichts ohne oder mit nur geringer Farbverfälschung erreicht. Es wird sogar eine geringere Gelbfärbung als bisherige Folien-Systeme erreicht oder zumindest eine vergleichbare Gelbfärbung, die nicht höher als bisherige Folien-Systeme liegt.

Allerdings lässt sich mit dem erfindungsgemäßen Verfahren ein Glasprodukt ohne das Fremdmaterial Folie mit den damit einhergehenden unerwünschten Eigenschaften von möglichen Alterungsprozessen erreichen, und die Möglichkeit der Formgestaltung ist weitaus größer als bei Folien-Systemen. Insbesondere können weitaus dünnere Glasscheiben als mit Folien-Systemen hergestellt werden.

Vorzugsweise bildet Siliziumoxid mit 55 bis 75 Gew.-% den Hauptbestandteil des Glasprodukts.

Bei einer vorteilhaften Ausgestaltung des Verfahrens ist ein Glasprodukt mit einem B₂O₃-Gehalt zwischen größer 1 und 7 Gew.-% vorgesehen. Durch höhere Boranteile lässt sich die Auflösung der anderen Glaskomponenten in der Glasmatrix beschleunigen und die Schmelztemperatur ohne gleichzeitige Erhöhung des thermischen Ausdehnungskoeffizienten deutlich absenken. Bevorzugt sind Gehalte von ca. 4 Gew.-%. Jedoch werden bei dem erfindungsgemäßen Verfahren höchstens 7 Gew.-% B₂O₃ verwendet, da sich höhere Anteile nachteilig auf die Glasqualität, u. a. bedingt durch eine verstärkte Korrosion der Glasschmelzhäfen, auswirken könnten.

Eine wesentliche Komponente des erfindungsgemäßen Verfahrens ist ZnO. Dieses Oxid liegt mit 4,5 bis 12 Gew.-% vor. Zinkoxid begünstigt die Bildung einer feindispersen Sekundärphase innerhalb der Glasschmelze. In dieser Sekundärphase sind die sulfidischen Komponenten CdS und ZnS angereichert. Dadurch wird eine über die Glasmasse homogen verteilte Kristallisation der betreffenden Sulfide erreicht. Bei der Temperung des Glases findet ein homogenes Kristallitwachstum statt, und es entstehen Kristallite mit einer sehr engen Größenverteilung. Aus solchen monodispersen Kristalliten resultieren die besonders scharfen Absorptionskanten des Glases. Bei einer gegebenen Kantenposition bleibt die (gelbliche) Farbtönung des UV-Schutzglases auf einem besonders geringem Level.

Die genannte Obergrenze von ZnO ist vorteilhaft, da Gläser, die einen hohen ZnO-Gehalt haben, dazu neigen, tropfenartige Ausscheidungsbereiche zu bilden, welche bereits so groß sind, dass sie Licht streuen, d. h. dass sie zu einer milchigen Trübung des Glases führen.

K₂O wird insbesondere als Netzwerkwandler eingesetzt und trägt dazu bei, die Schmelztemperatur sowie die Viskosität der Glasschmelze insgesamt zu reduzieren. Ein K₂O-Anteil von 5 bis 15 Gew.-% ist vorteilhaft, um ein zu frühes und zu schnelles Wachstum von Mikroausscheidungen, in denen ZnO gemeinsam mit den sulfidischen Komponenten CdS und ZnS angereichert ist, zu unterbinden und um damit verknüpft eine milchige Trübung des Glases zu vermeiden. Insbesondere werden hierdurch hochtransparente Gläser erhalten.

Bei dem erfindungsgemäßen Verfahren werden die Gewichtsanteile Cadmiumsulfid in Höhe von 0,05 bis 0,5 Gew.-% und Zinksulfid in Höhe von 0,1 bis 0,4 % als Dotierungsbestandteile eingesetzt. Innerhalb dieser relativ geringen Bereiche lässt sich eine hervorragende UV-Absorption bei gleichzeitig möglichst neutraler Farbgebung erreichen. Gerade dadurch erhält man ein Glas mit hoher UV-Absorption und dennoch geringer Verfärbung.

Weiter können in den Gläsern übliche Läutermittel in üblichen Mengen verwendet werden.

Die Gläser können mittels für Anlaufgläser üblicher Schmelzverfahren, d.h. unter neutralen bzw. schwach reduzierenden Bedingungen, erschmolzen werden.

Zur Ausbildung der gewünschten UV-Absorptionswirkungen werden die Gläser einem Anlaufprozess unterzogen. Direkt nach der Abkühlung von der Herstelltemperatur (insbesondere Schmelzen) sind die UV-Absorptionseigenschaften zunächst nur schwach und meist nicht ausreichend vorhanden. Daher werden die Gläser in Schritt c) einer weiteren Temperaturbehandlung im Größenbereich von 30 Minuten bis mehrere Tage unterzogen. Hierbei bilden sich aus den in den glasigen Mikrophasen angereicherten Cadmium-, Zink- und Sulfidionen Mikrokristallite aus Cadmiumsulfid und/oder Cadmiumsulfid / Zinksulfid-Mischkristallen, die für die besonderen Absorptionseigenschaften des UV-Glases sorgen.

Ein UV-absorbierendes Glas enthaltend:

| | | |
|---|---|---|
| SiO₂ | 55 - 75 | Gew.-%, |
| Na₂O | 0 - 18 | Gew.-% |
| CaO | 0 - 10 | Gew.-%, |
| K₂O | 5 - 15 | Gew.-%, vorzugsweise 6 - 10 Gew.-%, |
| B₂O₃ | 1 - 7 | Gew.-%, vorzugsweise 1 - 3,5 % |
| CdS | 0,05-0,5 | Gew.-%, |
| ZnS | 0,1 - 0,4 | Gew.-%, und |
| ZnO | 4,5 - 12 | Gew.-% |

ist zur Herstellung der Glasprodukte gemäß dem erfindungsgemäßen Verfahren besonders geeignet.

Das UV-absorbierende Glas weist eine Transmission mit einem Fußpunkt des Transmissionsspektrums (unterhalb dem es weniger als 0,1 % Lichttransmission gibt) bei ca. 380 nm bis 420 nm und vorzugsweise kleiner als 405 nm auf. Die Absorptionskante liegt vorzugsweise zwischen 390 nm und 450 nm.

Das UV-absorbierende Glas ist Teil eines Überfangglases mit einem Basisglas aus Klarglas und/oder Farbglas.

Gemäß einem weiteren Aspekt betrifft die Erfindung ein Verfahren zur Herstellung eines Glasprodukts (30) aus UV-absorbierenden Glas, gekennzeichnet durch Durchführen eines Verfahrens gemäß einer der oben erläuterten Ausgestaltungen des Herstellverfahrens so, dass das Glasprodukt
1) als Bauglas, insbesondere Fensterglas,
2) als Fenster- oder Bauglas in religiösen Bauten, Museen, historischen Gebäuden und/oder in der Denkmalspflege,
3) zum Bau von Vitrinen oder Schaubehältern, insbesondere für Museen oder Ausstellungen, und/oder
4) als Lampenglas verwendbar ist.

Gemäß einem weiteren Aspekt betrifft die Erfindung ein Verfahren zur Herstellung und Verwendung eines Glasprodukts aus UV-absorbierenden Glas, gekennzeichnet durch
Durchführen eines Verfahrens nach einer der voranstehenden Ausgestaltungen und Verwenden des Glasprodukts
1) als Bauglas, insbesondere Fensterglas,
2) als Fenster- oder Bauglas in religiösen Bauten, Museen, historischen Gebäuden und/oder in der Denkmalspflege,
3) zum Bau von Vitrinen oder Schaubehältern, insbesondere für Museen oder Ausstellungen, und/oder
4) als Lampenglas.

Es werden weiter ein Bauglas, ein Fensterglas, ein Fenster, eine Tür, eine Vitrine oder Schaubehälter oder eine Lampe oder einen Lampenschirm, jeweils enthaltend ein Glas oder Glasprodukt gemäß einer der zuvor erläuterten Ausgestaltungen vorgeschlagen.

Ausführungsbeispiele der Erfindung werden nachfolgend anhand der beigefügten Zeichnungen näher erläutert. Darin zeigen:
- Fig. 1: eine schematische Darstellung einer Glasofen-Schmelzanlage zur Durchführung einer Ausführungsform eines Verfahrens zum Herstellen eines Glasprodukts aus UV-absorbierendem Glas;
- Fig. 2: eine Glasbläserpfeife mit einer ersten Menge an Glas im Zuge des Verfahrens;
- Fig. 3: die Glasbläserpfeife mit einer ersten Menge und einer darüber befindlichen zweiten Menge an Glas im Zuge des Verfahrens;
- Fig. 4: eine schematische Darstellung der Glasbläserpfeife mit der ersten und zweiten Glasmenge beim Formen eines Glasprodukts im Zuge des Verfahrens;
- Fig. 5: eine schematische Darstellung einer Ausführungsform eines mit dem Verfahren herstellbaren Glasprodukts;
- Fig. 6: einen Temperierofen zur Durchführung eines Temperierschritts im Zuge des Verfahrens;
- Fig. 7: eine Darstellung vergleichbar mit Fig. 2 zur Darstellung einer Variante des Verfahrens;
- Fig. 8: eine Darstellung vergleichbar mit Fig. 3 zur Darstellung der Variante des Verfahrens;

- Fig. 9: eine Darstellung vergleichbar mit Fig. 5 eines mit der Variante des Verfahrens hergestellten Glasprodukts;
- Fig. 10: eine Darstellung eines Fensters eines Museums, eines Schlosses oder einer Kirche als Beispiel für eine Verwendung des Glasprodukts;
- Fig. 11: eine schematische Stellung einer weiteren möglichen Ausführungsform eines mit dem Verfahren herstellbaren Glasprodukts;
- Fig. 12: eine Schmelzwannenanlage in einer schematischen Darstellung zur Illustration einer weiteren Ausführungsform des Verfahrens zur Herstellung des Glasprodukts aus UV-absorbierendem Glas;
- Fig. 13: Transmissionsspektren von unterschiedlichen Proben aus einer ersten Glasschmelze - Schmelzversuch -, welche unterschiedlicher Temperaturbehandlungen unterzogen worden sind;
- Fig. 14: Transmissionsspektren vergleichbar mit Fig. 13 für Proben aus einem zweiten Schmelzversuch;
- Fig. 15: Transmissionsspektren von weiteren Proben aus dem zweiten Schmelzversuch ;
- Fig. 16: Transmissionsspektren vergleichbar der Fig. 13 bis 15 für Proben aus einem dritten Schmelzversuch;
- Fig. 17: ein Temperatur-Zeit-Diagramm, wobei Temperaturen und Zeiten des Temperierschritts für die unterschiedlichen Proben aus den unterschiedlichen Schmelzen gemäß den zuvor gezeigten Transmissionsspektren dargestellt sind, wobei jeweils der Fußpunkt der Absorptionskante angegeben ist.

- Fig. 18: ein Temperatur-Zeit-Diagramm vergleichbar mit Fig. 17, wobei anstelle des Fußpunkts der Absorptionskante die Kantenwellenlänge der Absorptionskante angegeben ist;
- Fig. 19: eine schematische Darstellung zur Darstellung des Einflusses von Glaszusammensetzung, Temperatur- und Temperzeit auf die Lage des Fußpunktes der Absorptionskante; und
- Fig. 20: eine Darstellung vergleichbar mit Fig. 19 zur schematischen Darstellung des Einflusses von Glaszusammensetzung, Temperatur- und Temperzeit auf die Lage der Absorptionskante.

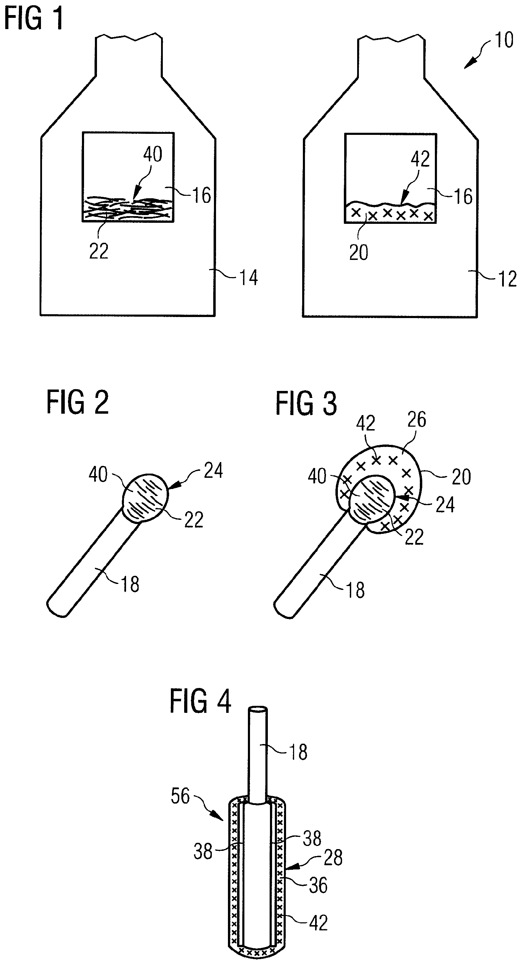

Fig. 1 zeigt eine Glasschmelzanlage 10 mit mehreren Glasschmelzöfen 12, 14. Die Glasschmelzanlage 10 weist einen ersten Glasschmelzofen 12 und einen zweiten Glasschmelzofen 14 auf.

Gemäß einem ersten Ausführungsbeispiel ist die Glasschmelzanlage 10 als Teil einer Glashütte ausgebildet, wobei die Glasschmelzöfen 12, 14 als Hafen-Öfen mit je einer Öffnung 16 zum Entnehmen von Glas, beispielsweise mittels Glasbläserpfeifen 18, ausgebildet sind.

In dem ersten Glasschmelzofen 12 wird eine Glasschmelze bereitet zum Herstellen eines Glases, das enthält:

| | | |
|---|---|---|
| SiO₂ | 55 - 75 | Gew.-% |
| Na₂O | 0 - 18 | Gew.-% |
| CaO | 0 - 10 | Gew.-% |
| K₂O | 5 - 15 | Gew.-% |
| B₂O₃ | 1 - 7 | Gew.-% |
| CdS | 0,05 - 0,5 | Gew.-% |
| ZnS | 0,1 - 0,4 | Gew.-% |
| ZnO | 4,5 - 12 | Gew.-% |

Diese in dem ersten Glasschmelzofen 12 enthaltene Glasschmelze dient zum Herstellen eines Glases, welches Licht im ultravioletten Spektralbereich herausfiltert, also eines UV-absorbierenden Glases. Daher wird diese Schmelze in dem ersten Glasschmelzofen 12 im Folgenden als UV-Schutzglas-Schmelze 20 bezeichnet.

In dem zweiten Glasschmelzofen 14 wird in gut bekannter Weise eine Glasschmelze für ein übliches Klarglas, beispielsweise ein Kalk-Natron-Glas, bereitet. Gemäß einer anderen Ausführungsform wird in dem zweiten Glasschmelzofen 14 oder in einem nicht dargestellten dritten Glasschmelzofen eine Farbglasschmelze zum Bereiten eines farbigen Glases zubereitet.

Die Glasschmelzen in allen Glasschmelzöfen 12, 14 sind bezüglich des Wärmeausdehnungskoeffizienten des damit hergestellten Glases aufeinander abgestimmt.

Mit der in den Fig. 2 und 3 dargestellten Glasbläserpfeife 18 wird, wie dies in Fig. 2 dargestellt ist, bei einer ersten Ausführungsform eines Verfahrens zum Herstellen eines Glasprodukts 30 aus UV-absorbierendem Glas zunächst eine erste Glasmenge 24 von der Klarglasschmelze 22 aus dem zweiten Glasschmelzofen 14 entnommen, rundlich geformt, eventuell nur leicht angeblasen und etwas abkühlen gelassen. Die Glasbläserpfeife 18 mit der auf diese Weise zähflüssiger gemachten Klarglasschmelze 22 wird dann in den ersten Glasschmelzofen 12 eingetaucht, um über der ersten Glasmenge 24 eine zweite Glasmenge 22 aus UV-Schutzglasschmelze 20 entnommen, wie dies in Fig. 3 dargestellt ist.

Anschließend wird das aus den beiden Glasmengen 24, 26 gebildete Glas an der Glasbläserpfeife 18 zu einem gewünschten Produkt geformt.

Beispielsweise wird, wie dies in Fig. 4 dargestellt ist, das Glas mit der Glasbläserpfeife 18 angeblasen und durch nach unten Halten zu einem Glaszylinder 28 geformt.

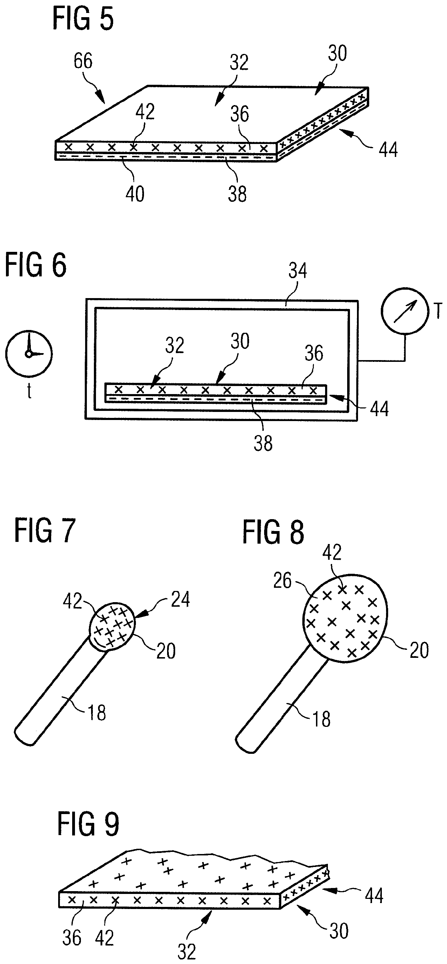

Aus dem Glaszylinder 28 lässt sich beispielsweise ein Glasprodukt 30 in Form eines in Fig. 5 dargestellten Flachglases 32 durch Aufschneiden und Abflachen bilden. Das Flachglas 32 kann zum Einsetzen in Fensterscheiben oder für Vitrinen verwendet werden.

Anschließend wird das Glasprodukt 30 in einem Temperierofen 34 für eine Zeit t bei einer Temperatur T temperiert. Die Temperatur T liegt beispielsweise zwischen 540 °C und 750 °C. Die Zeitdauer für das Temperieren liegt vorzugsweise zwischen ca. 1 Stunde und 50 Stunden. Dadurch wird das Glasprodukt 30 aus Anlaufglas gebildet. Das Temperieren erfolgt so, dass eine möglichst scharfe Absorptionskante zwischen etwa 390 nm und 450 nm entsteht. Die Schärfe der Absorptionskante kann man z.B. durch die relative Lage zwischen Absorptionskante (Transmission < 50 %) und des Fußpunktes (Transmission < 0,01 %) charakterisieren. Der Abstand zwischen Fußpunkt und Absorptionskante liegt vorzugsweise unter 30 nm, mehr bevorzugt unter 20 nm. Das Temperieren erfolgt so, dass diese Transmissionseigenschaften erreicht werden.

Bei dem zuvor anhand der Fig. 1 bis 6 erläuterten Verfahren zum Herstellen des Glasprodukts 30 wird ein Glasprodukt 30 aus Überfangglas hergestellt. Diese Technik zum Herstellen des Überfangglases ist grundsätzlich, insbesondere für mundgeblasenes Glas, zum Herstellen von Farbgläsern unterschiedlicher Gestalt seit längerem bekannt. Dieses bekannte Verfahren wird jedoch bei dem hier dargestellten Verfahren zum Herstellen eines UV-Schutzglases, das eine möglichst geringe Gelbfärbung, jedoch eine scharfe Absorptionskante zum Absorbieren von UV-Licht aufweist. Hierzu weist das als Überfangglas ausgebildete Glasprodukt 30 eine UV-Schutzglasschicht 36 und eine Basisglasschicht 38 aus einem Basisglas 40 auf.

Bei der zuvor erläuterten ersten Ausführungsform ist als Basisglas 40 ein Klarglas, insbesondere ein Kalk-Natron-Glas, verwendet. Dies hat den Vorteil einer geringeren Gelbfärbung und einer hohen Lichtdurchlässigkeit mit einem natürlichen Spektrum.

Die UV-Schutzglasschicht 36 weist eine Dicke von mindestens 1,2 mm, vorzugsweise ca. 1,6 mm, auf und dient zum Herausfiltern des UV-Lichts.

Bei einer weiteren Ausführungsform wird als Basisglas 40 ein Farbglas verwendet. Bei noch einer weiteren Ausführungsform wird als Basisglas 40 bereits ein Überfangglas mit mehreren Schichten verwendet. Hierzu wird das anhand der Fig. 1 bis 3 erläuterte Verfahren durch mehrmaliges Entnehmen unterschiedlicher Glasmengen 24, 26 durchgeführt, wobei auch noch eine dritte oder vierte Glasmenge, beispielsweise aus unterschiedlichem Farbglas, entnommen wird. Z.B. kann eine Schicht Klarglas, eine Schicht Farbglas und eine Schicht UV-Glas vorgesehen sein.

Bei einer dritten Ausführungsform des Verfahrens zum Herstellen eines Glasprodukts aus UV-absorbierendem Glas wird, wie dies in Fig. 7 dargestellt ist, als erste Glasmenge 24 bereits eine Menge aus der UV-Schutzglasschmelze 20 herausgenommen, wobei darüber auch die zweite Glasmenge 26 aus UV-Schutzglasschmelze 20 entnommen wird. Die weiteren Schritte sind analog zu dem zuvor erläuterten Verfahren. Es lässt sich dann das in Fig. 9 dargestellte Glasprodukt 30 in Form eines Flachglases 32, das massiv ganz aus UV-Schutzglas 42 gebildet ist, herstellen.

Sowohl bei dem Glasprodukt 30 der Fig. 5 als auch bei dem Glasprodukt 30 der Fig. 9 handelt es sich um ein Anlaufglas 44, welches entsprechend temperiert worden ist, um die gewünschten Absorptionseigenschaften zu erzielen.

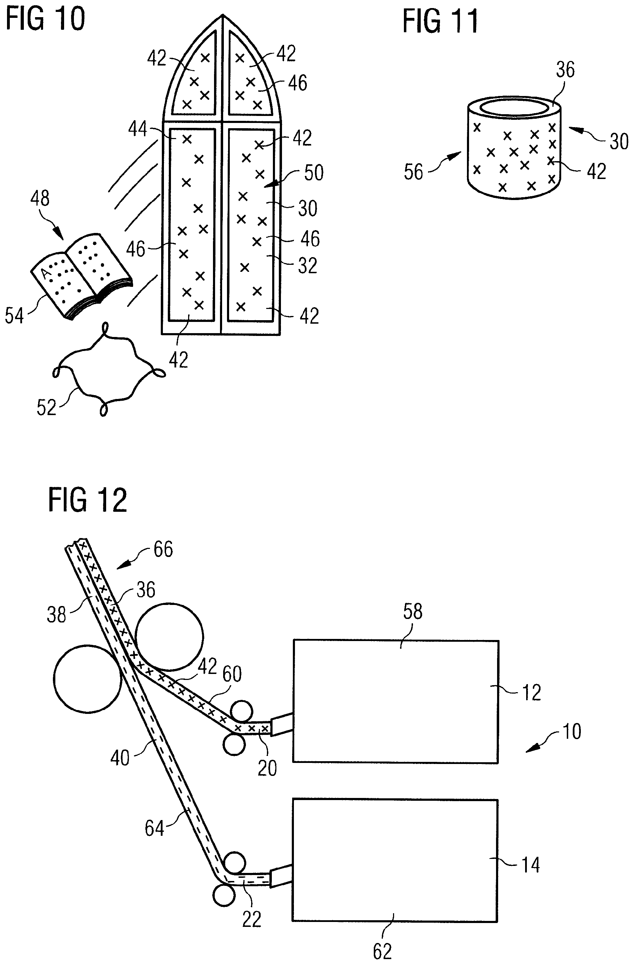

Fig. 10 zeigt eine mögliche vorteilhafte Verwendung des Glasprodukts 30 aus UV-absorbierendem Glas 42. Das Glasprodukt 30 wird beispielsweise als Fensterscheibe 46 für einen Raum mit UV-empfindlichen Gegenständen 48 verwendet. Bei dem Fenster 50 handelt es sich beispielsweise um ein Kirchenfenster, ein Fenster eines Museums, ein Fenster eines historischen Gebäudes, wie beispielsweise eines Schlosses oder einer alten Villa oder dergleichen. Bei den UV-empfindlichen Gegenständen 48 kann es sich um wertvolle Stoffprodukte 52, wie beispielsweise Wandteppiche, historische Gewänder usw., um Gemälde oder um historische Papierprodukte, wie z.B. Bücher 54, handeln.

Anstelle eines Fensterglases für ein Fenster 50 kann das Flachglas 32 mit der UV-Schutzglasschicht 36 auch zum Bau von Vitrinen, von Museen oder Sammlungsräumen oder dergleichen verwendet werden. Das Glasprodukt 30 ermöglicht ein möglichst farbunverfälschtes Beleuchten und/oder Ansehen von UV-empfindlichen Gegenständen 48 bei möglichst hohem UV-Schutz.

Das Glasprodukt 30 muss jedoch nicht als Flachglas 32 vorliegen. Es können ganz unterschiedliche Glasformen gestaltet werden. Fig. 11 zeigt das Glasprodukt 30, hier als Massivglas ganz aus UV-Schutzglas 42 in Form eines Glaszylinders 56. Der Glaszylinder 56 kann beispielsweise als Lampenschirm für eine Lichtquelle verwendet werden, die unter anderem Licht im UV-Bereich abstrahlt, welches herausgefiltert werden soll.

Bei den zuvor anhand der Fig. 1 bis 11 dargestellten Verfahren zum Herstellen des Glasproduktes wird Mundblasen verwendet. Dieses mehr handwerkliche Glasherstellverfahren ermöglicht eine große Vielfalt von unterschiedlich geformten Glasprodukten 30 und ermöglicht darüber hinaus auch eine große Vielfalt von unterschiedlichen Farbgebungen und Farbgestaltungen. Weiter ist es im Mundblasverfahren möglich, auch sehr geringe Glasmengen in wirtschaftlicher Weise herzustellen.

Daher ist das Verfahren insbesondere zur Herstellung von individuellen Glasprodukten für die Denkmalpflege und für besondere Bauprojekte oder individuelle Vitrinengestaltung oder dergleichen vorteilhaft.

Andererseits ist es auch möglich, Überfangglas industriell in Großserie herzustellen. Fig. 12 zeigt schematisch ein Verfahren zur Großserienherstellung von Überfangglas, wobei hier ebenfalls ein Glasprodukt 30 in Form von Flachglas 32 mit einer UV-Schutzglasschicht 36 hergestellt wird.

Hierzu ist der erste Glasschmelzofen 12 in Form einer ersten Glasschmelzwanne 58 ausgebildet, aus der ein erster Glasstrang 60 zum Glaswalzen entnommen wird. Der zweite Glasschmelzofen 14 ist als zweite Glasschmelzwanne 62 ausgebildet, aus der ein zweiter Glasstrang 64 zum gemeinsamen Walzen mit dem ersten Glasstrang 60 entnommen wird.

In der ersten Glasschmelzwanne 58 wird ein Gemenge zum Herstellen der UV-Schutzglas-Schmelze mit der oben genannten Zusammensetzung geschmolzen. In der zweiten Glasschmelzwanne 62 wird beispielsweise das Kalk-Natron-Glas hergestellt. Durch gemeinsames Walzen entsteht so das Überfangglas 66 mit der UV-Schutzglasschicht 36 und der Basisglasschicht 38.

Ein bevorzugtes Verhältnis der hier in Rede stehenden Überfanggläser 66 hat ca. 1/3 UV-Schutzglas 42 und ca. 2/3 Basisglas 40.

Die UV-Schutzglasschicht 36 hat vorzugsweise eine Dicke von 1,0 bis 3 mm, mehr vorzugsweise 1,2 mm und mehr, und am meisten bevorzugt ca. 1,6 mm.

Das Anlaufglas 44 wird vorzugsweise derart temperiert, dass bei 400 nm und geringer eine Resttransmission festzustellen ist, die deutlich unter 0,1% liegt. Vorzugsweise liegen die Fußpunkte der Transmissionskurve zwischen 380 nm und 420 nm. Weiter vorzugsweise ist eine sehr scharfe Transmissionskurve vorgesehen, wobei die Fußpunkte kleiner als 0,1 % unter der Kantenwellenlänge λ_{C} liegt.

Vorzugsweise wird hierzu eine Temperierung bei einer Temperatur durchgeführt, die zwischen der Glasübergangstemperatur T_{G} und der Glaserweichungstemperatur T_{W} liegt.

Es hat sich herausgestellt, dass eine besonders lange Temperierzeit t zwischen 20 und 40 Stunden bei einer relativ niedrigen Temperiertemperatur T vorteilhaft ist. Je größer die Temperiertemperatur ist, desto kleiner kann die Temperierzeit t gehalten werden. Allerdings ist dann die Formstabilität des Glasproduktes 30 schwieriger einzuhalten.

Die Herstellung des UV-Schutzglases 42 wird im Folgenden anhand konkreter Beispiele näher erläutert.

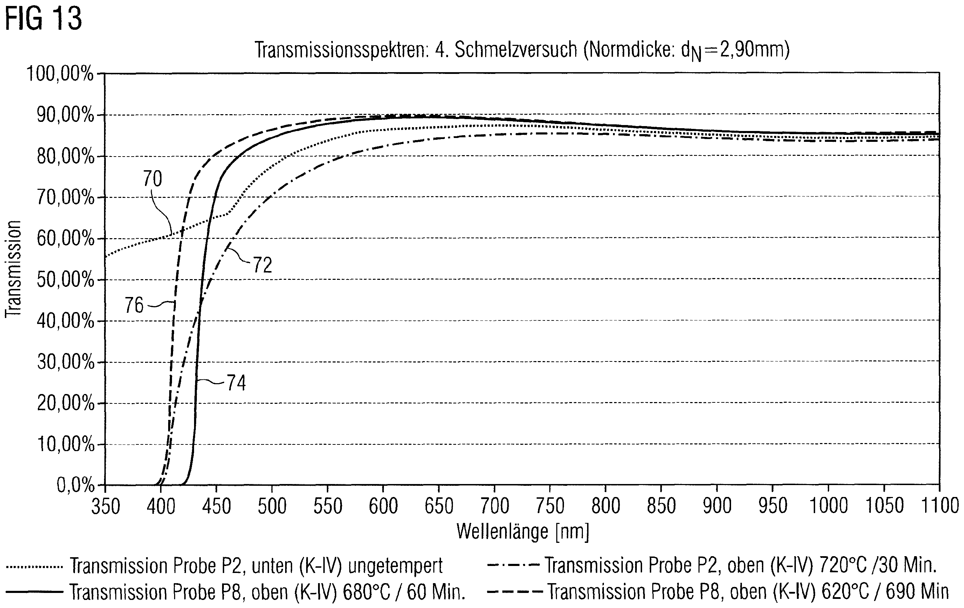

Hierzu wurden unterschiedliche Schmelzversuche durchgeführt, aus den UV-Schutzglas-Schmelzen 20 an unterschiedlichen Stellen der in Fig. 4 dargestellten Form Glasproben entnommen und in unterschiedlicher Weise temperiert. Die Zusammensetzungen wurden chemisch analysiert. Weiter sind die Transmissionskurven für unterschiedliche Glasproben erstellt worden. Die Ergebnisse sind in den Fig. 13 bis 20 dargestellt. Von den sehr vielen Proben aus unterschiedlichen Schmelzversuchen sind hier zur besseren Übersichtlichkeit nur Proben aus dem vierten, dem fünften und siebten Schmelzversuch dargestellt.

Fig. 13 zeigt Transmissionsspektren für Proben aus dem vierten Schmelzversuch. Bei dem vierten Schmelzversuch enthielt die UV-Schutzglas-Schmelze 20:

| | |
|---|---|
| SiO₂ ca. 67,3 | Gew.-% |
| K₂O ca. 6,4 | Gew.-% |
| B₂O₃ca. 3,8 | Gew.-% |
| CdS ca. 0,09 | Gew.-% |
| ZnS ca. 0,23 | Gew.-% |
| ZnO ca. 5,25 | Gew.-% |

Weitere Bestandteile waren:

| | |
|---|---|
| Al₂O₃ ca. 0,2 | Gew.-% |
| Fe₂O₃ ca. 0,02 | Gew.-% |
| TiO₂ ca. 0,02 | Gew.-% |
| CaO ca. 5,7 | Gew.-% |
| MgOca. 0,04 | Gew.-% |
| Na₂O ca. 10,6 | Gew.-% |

Die Glasproben des vierten Schmelzversuchs wurden als Überfanggläser 66 mit Klarglas als Basisglas hergestellt.

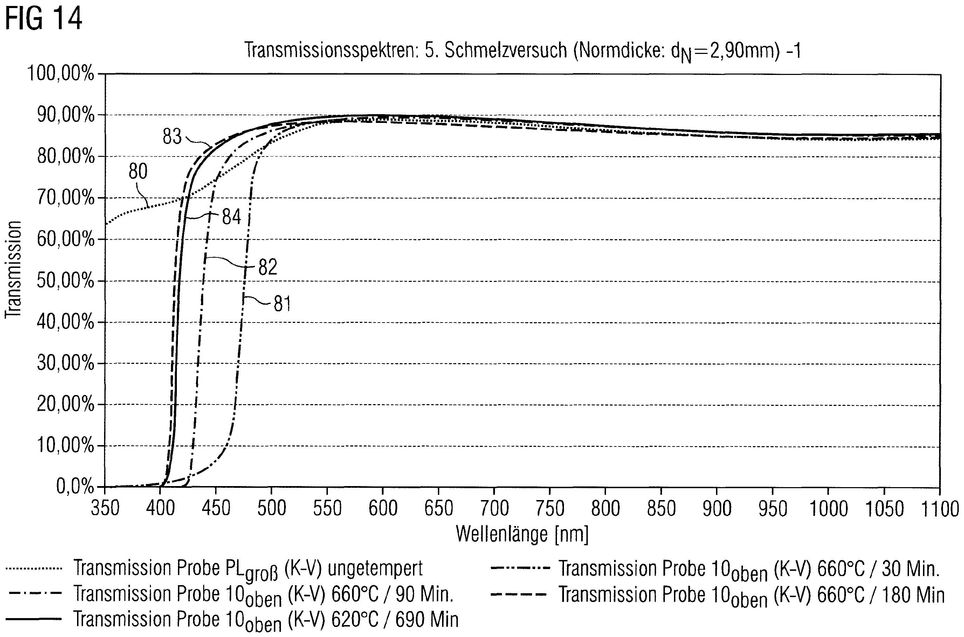

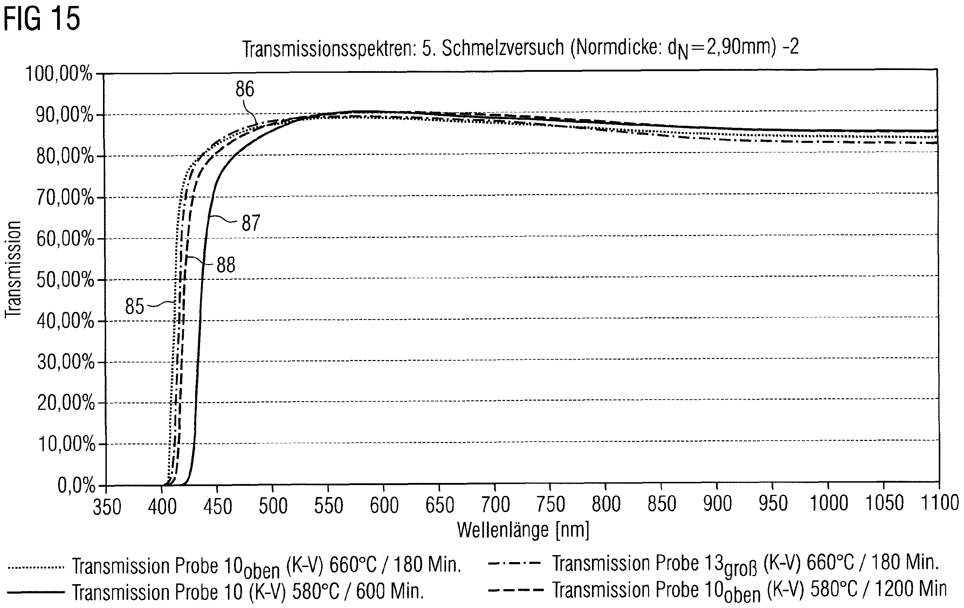

Fig. 14 und 15 zeigen Transmissionsspektren für Proben aus dem fünften Schmelzversuch. Bei dem fünften Schmelzversuch enthielt die Glasschmelze:

| | |
|---|---|
| SiO₂ ca. 68,0 | Gew.-% |
| K₂O ca. 7,4 | Gew.-% |
| B₂O₃ ca. 3,2 | Gew.-% |
| CdS ca. 0,15 | Gew.-% |
| ZnS ca. 0,11 | Gew.-% |
| ZnO ca. 5,3 | Gew.-% |

Weitere Bestandteile waren:

| | |
|---|---|
| Al₂O₃ ca. 0,2 | Gew.-% |
| Fe₂O₃ ca. 0,02 | Gew.-% |
| TiO₂ ca. 0,02 | Gew.-% |
| CaO ca. 5,5 | Gew.-% |
| MgOca. 0,02 | Gew.-% |
| Na₂O ca. 9,8 | Gew.-% |

Bei dem fünften und siebten Schmelzversuch wurden die Proben, wie in Fig. 7 bis 9 dargestellt, massiv aus UV-Schutzglas-Schmelze 20 hergestellt.

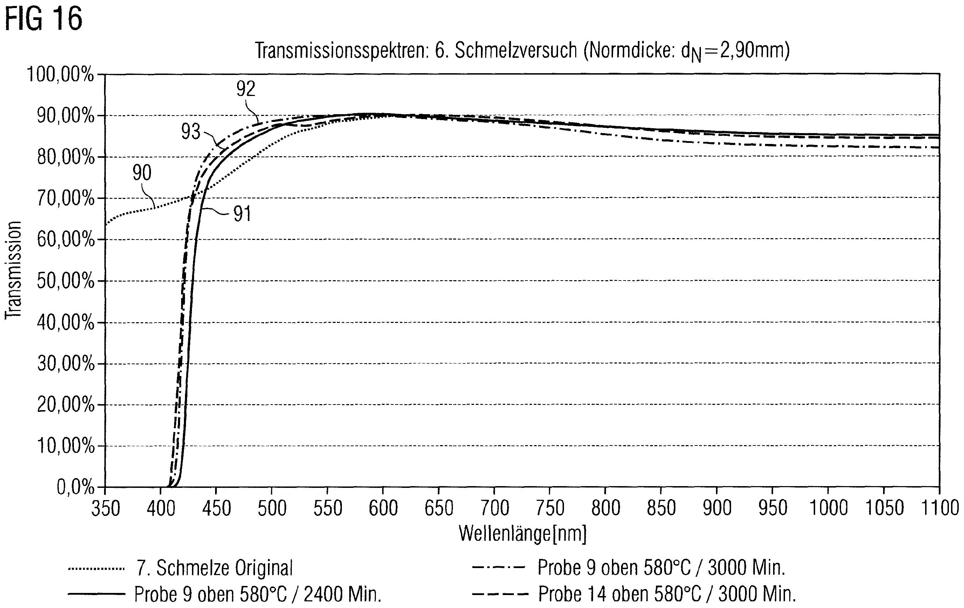

Fig. 16 zeigt Transmissionsspektren für Proben aus dem siebten Schmelzversuch. Bei dem siebten Schmelzversuch enthielt die Glasschmelze:

| | |
|---|---|
| SiO₂ ca. 66,6 | Gew.-% |
| K₂O ca. 8,7 | Gew.-% |
| B₂O₃ca. 3,2 | Gew.-% |
| CdS ca. 0,14 | Gew.-% |
| ZnS ca. 0,20 | Gew.-% |
| ZnO ca. 5,3 | Gew.-% |

Weitere Bestandteile waren:

| | |
|---|---|
| Al₂O₃ ca. 0,18 | Gew.-% |
| Fe₂O₃ ca. 0,02 | Gew.-% |
| TiO₂ ca. 0,02 | Gew.-% |
| CaO ca. 5,8 | Gew.-% |
| MgOca. 0,03 | Gew.-% |
| Na₂O ca. 9,5 | Gew.-% |

Bei sämtlichen Schmelzversuchen wurden Proben an unterschiedlichen Stellen entnommen, zu dem Flachglas 32, wie in Fig. 5 (vierter Schmelzversuch) bzw. in Fig. 9 (fünfter und sechster Schmelzversuch) dargestellt, und dann unterschiedlichen Temperierungen unterworfen. Von den getemperten Proben wurden anschließend die Transmissionsspektren aufgenommen, welche zum Vergleich auf eine formal gleiche Glasdicke (Normdicke) von d_{N} = 2,90 mm umgerechnet wurden. Diese Spektren sind in den Fig. 13 bis 16 dargestellt.

Fig. 13 zeigt dabei vier Kurven 70, 72, 74, 76, wobei bei den Kurven 70, 72 die Transmission für eine erste Probe P2 aus dem vierten Schmelzversuch dargestellt ist, wobei das Glas dieser Proben aus unterschiedlichen Stellen (unten bei Kurve 70 und oben bei Kurve 72, siehe Fig. 4) bezüglich der Glasbläserpfeife entnommen worden ist und die Kurve 70 die Transmission dieser Probe, noch ungetempert, darstellt und die Kurve 72 die Transmission dieser Probe nach einer Temperierung bei 720 °C für 30 Minuten darstellt. Die Kurven 74 und 76 zeigen die Transmission für eine zweite Probe P8 aus dem vierten Schmelzversuch. Dabei zeigt die Kurve 74 die Transmission dieser Probe P8 nach einer Temperung bei 680 °C für 60 Minuten und die Kurve 76 die Transmission dieser Probe P8 nach einer Temperung bei 620 °C für 690 Minuten.

Aus Fig. 13 kann man entnehmen, dass sich bei einer Temperung bei einer relativ geringen Temperatur für entsprechend längere Zeit eine verbesserte Transmissionskurve mit einem Fußpunkt (Transmission kleiner als 0,1 %) der Transmissionskurve unterhalb von 450 nm und einer steilen Absorptionskante einstellt. Insbesondere die Kurve 76 zeigt, dass bei einer langen Temperung ein Fußpunkt bei 400 nm bei entsprechend steiler Transmissionskurve erhältlich ist.

Die Fig. 14 und 15 zeigen Transmissionskurven 80 bis 88 für Proben aus dem fünften Schmelzversuch wie folgt:

| | |
|---|---|
| Transmissionskurve 80 | Probe PL_{groß} aus dem 5. Schmelzversuch, ungetempert |
| Transmissionskurve 81 | Probe P10_{oben}, aus dem 5. Schmelzversuch, oben, T = 660°C, t = 30 min |
| Transmissionskurve 82 | Probe P10_{oben}, aus dem 5. Schmelzversuch, oben, T = 660°C, t = 90 min |
| Transmissionskurve 83 | Probe P10_{oben}, aus dem 5. Schmelzversuch, oben, T = 660°C, t = 180 min |
| Transmissionskurve 84 | Probe P10_{oben}, aus dem 5. Schmelzversuch, oben, T = 620°C, t = 690 min |
| Transmissionskurve 85 | Probe P10_{oben}, aus dem 5. Schmelzversuch, oben, T = 660°C, t = 180 min |
| Transmissionskurve 86 | Probe P13_{groß}, aus dem 5. Schmelzversuch, T = 660°C, t = 180 min |
| Transmissionskurve 87 | Probe P10, aus dem 5. Schmelzversuch, T = 580°C, t = 600 min |
| Transmissionskurve 88 | Probe P10, aus dem 5. Schmelzversuch, T = 580°C, t = 1200 min. |

Auch hier zeigt eine lange Temperung bei relativ geringen Temperaturen um die 600 °C eine scharfe Transmissionskante mit Fußpunkten etwas oberhalb von 400 nm.

Fig. 16 zeigt Transmissionskurven 90 bis 93 für Proben aus dem 7. Schmelzversuch wie folgt:

| | |
|---|---|
| Transmissionskurve 90 | Probe aus 7. Schmelzversuch, ungetempert |
| Transmissionskurve 91 | Probe P9, aus dem 7. Schmelzversuch, oben, T = 580°C, t = 2400 min |
| Transmissionskurve 92 | Probe P9, aus dem 7. Schmelzversuch, oben, T = 580°C, t = 3000 min |
| Transmissionskurve 93 | Probe P14, aus dem 7. Schmelzversuch, oben, T = 580°C, t = 3000 min |

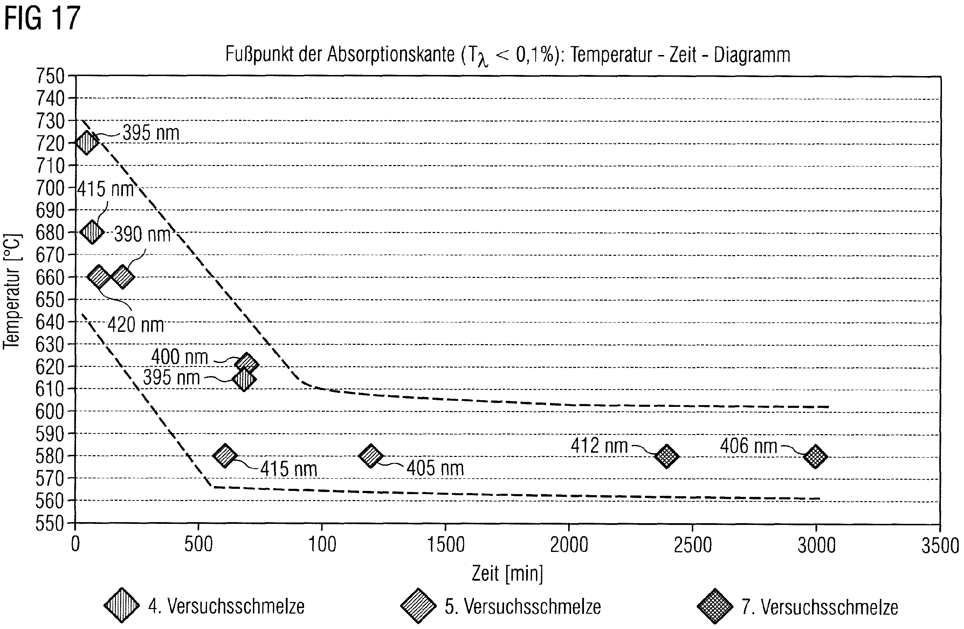

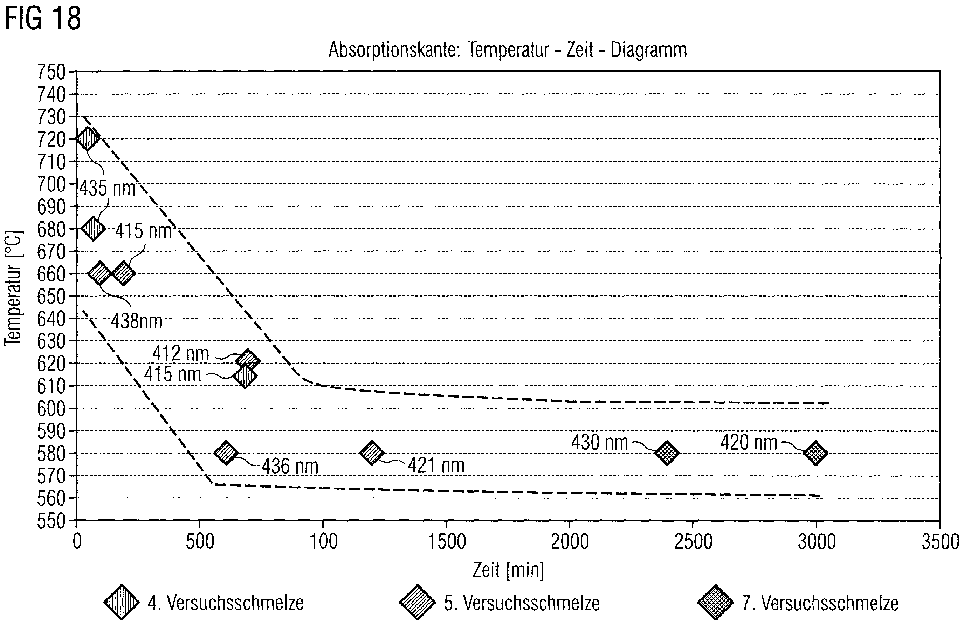

Fig. 17 zeigt in einem Diagramm mit der Zeit t in Minuten auf der x-Achse und der Temperier-Temperatur T auf der y-Achse ein T-t-Diagramm zur Darstellung der Abhängigkeit des Fußpunktes der Absorptionskante (Transmission unterhalb des Fußpunktes weniger als 0,1 %). In Fig. 18 ist in einer vergleichbaren Darstellung bei den einzelnen Versuchsproben die Lage der Absorptionskante λ_{C} angegeben.

Es zeigt sich, dass die Temperierung vorteilhaft innerhalb der durch gestrichelte Linien angegebenen Grenzen gehalten werden sollte.

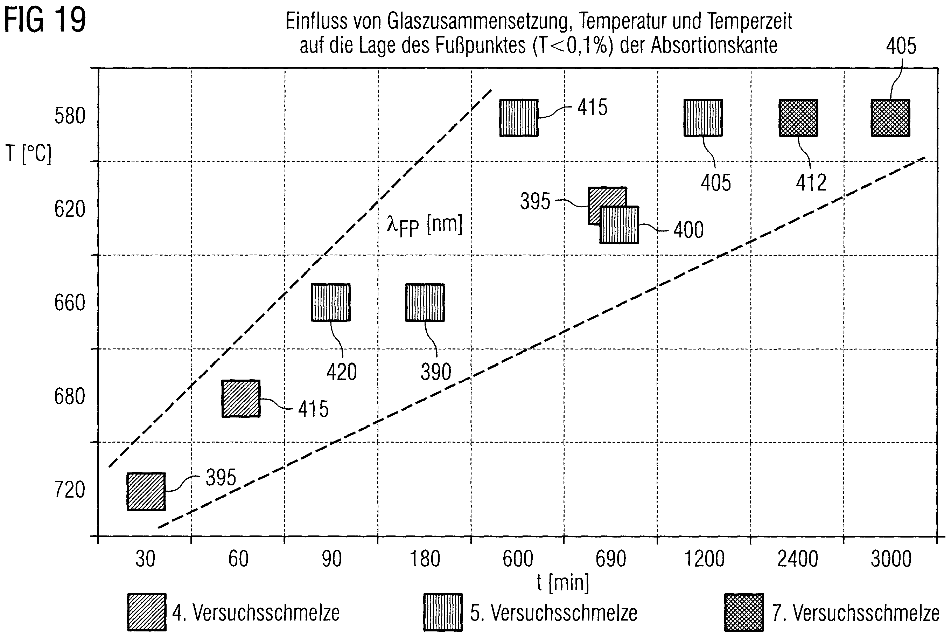

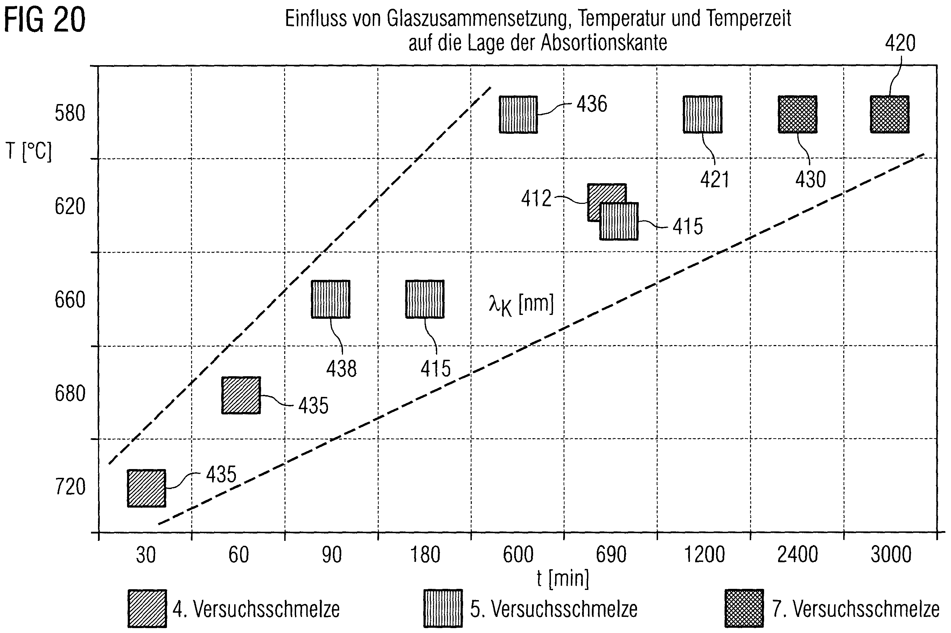

Bei den Fig. 19 und 20 ist der Einfluss von Glaszusammensetzung, Temperatur und Temperzeit auf die Lage des Fußpunktes der Absorptionskante (Fig. 19) bzw. auf die Lage der Absorptionskante (Fig. 20) in einer Darstellung gewählt, bei der die Zeitkoordinate nicht maßstabsgetreu wiedergegeben ist, sondern die Zeitachse in aufeinanderfolgenden Blöcken mit jeweils gleichbleibender Breite untergliedert ist.

Sowohl aus den Fig. 17 und 18 sowie aus den Fig. 19 und 20 geht hervor, dass steigende Temperaturen und/oder zunehmende Temperzeiten die Bildung einer steilen Absorptionskante und deren Verschiebung zu kürzeren Wellenlängen forcieren, während ein zunehmender Kaliumgehalt - das Glas des 7. Schmelzversuchs weist den höchsten K₂O-Gehalt auf - diesbezüglich eher kontraproduktiv wirkt. Allerdings führt ein zu niedriger Kaliumgehalt dazu, dass es beim Ausarbeiten der Glastafeln nach der in den Fig. 1 bis 9 wiedergegebenen Verfahrenstechnik zu Trübungen des Glases - speziell im unteren Bereich der Glaszylinder von Fig. 4 - kommen kann.

### Bezugszeichenliste:

- 10: Glasschmelzanlage
- 12: erster Glasschmelzofen
- 14: zweiter Glasschmelzofen
- 16: Glasentnahmeöffnung
- 18: Glasbläserpfeife
- 20: UV-Schutzglas-Schmelze
- 22: Klarglas-Schmelze
- 24: erste Glasmenge
- 26: zweite Glasmenge
- 28: Glaszylinder
- 30: Glasprodukt
- 32: Flachglas
- 34: Temperierofen
- 36: UV-Schutzglasschicht
- 38: Basisglasschicht
- 40: Basisglas
- 42: UV-Schutzglas
- 44: Anlaufglas
- 46: Fensterscheibe
- 48: UV-empfindliche Gegenstände
- 50: Fenster
- 52: Stoffprodukt
- 54: Buch
- 56: Glaszylinder
- 58: erste Glasschmelzwanne
- 60: erster Glasstrang
- 62: zweite Glasschmelzwanne
- 64: zweiter Glasstrang
- 66: Überfangglas
- 70: Transmission Probe P2 aus 4. Schmelzversuch, unten, ungetempert
- 72: Transmission Probe P2 aus 4. Schmelzversuch, oben, T = 720°C, t = 30 min

- 74: Transmission Probe P8 aus 4. Schmelzversuch, oben, T = 680°C, t = 60 min
- 76: Transmission Probe P8 aus 4. Schmelzversuch, oben, T = 620°C, t = 690 min
- 80: Transmission Probe PL_{groß} aus dem 5. Schmelzversuch, ungetempert
- 81: Transmission Probe P10_{oben}, aus dem 5. Schmelzversuch, oben, T = 660°C, t = 30 min
- 82: Transmission Probe P10_{oben}, aus dem 5. Schmelzversuch, oben, T = 660°C, t = 90 min
- 83: Transmission Probe P10_{oben}, aus dem 5. Schmelzversuch, oben, T = 660°C, t = 180 min
- 84: Transmission Probe P10_{oben}, aus dem 5. Schmelzversuch, oben, T = 620°C, t = 690 min
- 85: Transmission Probe P10_{oben}, aus dem 5. Schmelzversuch, oben, T = 660°C, t = 180 min
- 86: Transmission Probe P13_{groß}, aus dem 5. Schmelzversuch, T = 660°C, t = 180 min
- 87: Transmission Probe P10, aus dem 5. Schmelzversuch, T = 580°C, t = 600 min
- 88: Transmission Probe P10, aus dem 5. Schmelzversuch, T = 580°C, t = 1200 min
- 90: Transmission Probe aus 7. Schmelzversuch, ungetempert
- 91: Transmission Probe P9, aus dem 7. Schmelzversuch, oben, T = 580°C, t = 2400 min
- 92: Transmission Probe P9, aus dem 7. Schmelzversuch, oben, T = 580°C, t = 3000 min
- 93: Transmission Probe P14, aus dem 7. Schmelzversuch, oben, T = 580°C, t = 3000 min

## Patentansprüche

1. Verfahren zum Herstellen eines Glasprodukts (30) aus UV-absorbierenden Glas mit den Schritten:
a) Herstellen einer UV-Schutzglas-Schmelze (20) enthaltend:
| | | |
|---|---|---|
| SiO₂ | 55 - 75 | Gew.-% |
| Na₂O | 0 - 18 | Gew.-% |
| CaO | 0-10 | Gew.-% |
| K₂O | 5-15 | Gew.-% |
| B₂O₃ | 1 - 7 | Gew.-% |
| CdS | 0,05 - 0,5 | Gew.-% |
| ZnS | 0,1 - 0,4 | Gew.-% |
| ZnO | 4,5-12 | Gew.-% |
b) Formen des Glasprodukts (30),
c) Temperieren des Glasprodukts (30) für eine Zeit t bei einer Temperatur T, wobei gilt:
540°C ≤ T ≤ 750°C und 1h ≤ t ≤ 50h.

2. Verfahren nach Anspruch 1,
**dadurch gekennzeichnet,**
**dass** in Schritt b) das Glasprodukt (30) massiv aus der in Schritt a) hergestellten UV-Schutzglas-Schmelze (20) geformt wird.

3. Verfahren nach Anspruch 2,
**dadurch gekennzeichnet,**
**dass** Schritt b) Mundblasen des Glasprodukts (30) enthält, wobei in Schritt b) zunächst eine erste Menge Glas (24) aus der UV-Schutzglasschmelze (20) entnommen und abgekühlt wird und dann über die abgekühlte erste Menge Glas (24) eine zweite Menge Glas (26) aus der UV-Schutzglasschmelze (20) entnommen wird.

4. Verfahren nach Anspruch 1,
**dadurch gekennzeichnet,**
**dass** in Schritt b) das Glasprodukt (30) aus Überfangglas (66) mit wenigstens einer Basisglasschicht (38) aus einer Basisglasschmelze ohne UV-absorbierende Eigenschaften und wenigstens einer UV-Schutzglas-Schicht (36) aus der UV-Schutzglas-Schmelze (20) geformt wird.

5. Verfahren nach Anspruch 4,
**dadurch gekennzeichnet**,
5.1 dass Schritt b) derart durchgeführt wird, dass die Dicke der UV-Schutzglasschicht (36) mindestens ca. 1,2 mm beträgt und insbesondere zwischen ca. 1,2 mm und 3,0 mm und bevorzugt ca. 1,6 mm beträgt und/oder
5.2 dass als Basisglas (40)
ein farbloses Klarglas, insbesondere ein Kalk-Natron-Glas, und/oder ein Farbglas
verwendet wird
und/oder
5.3 dass Schritt b) Mundblasen des Glasprodukts (30) enthält, wobei in Schritt b) zunächst eine erste Menge Glas (24) aus der Basisglasschmelze entnommen und abgekühlt wird und dann über die abgekühlte erste Menge Glas (24) aus Basisglas eine zweite Menge Glas (26) aus der UV-Schutzglasschmelze (20) entnommen wird

6. Verfahren nach einem der voranstehenden Ansprüche,
**dadurch gekennzeichnet**,
6.1) dass Schritt b) enthält: Formen eines Flachglases (32), insbesondere in Form einer Glasscheibe oder
6.2) dass Schritt b) enthält: Ausformen eines Glaszylinders (56) oder einer gebogenen Glasform;
und/oder
6.3) dass in Schritt b) mittels Mundblasen zunächst ein Zylinder ausgeformt wird,
aus dem ein Flachglas (32) als Glasprodukt (30) geformt wird,
und/oder
6.4) dass in Schritt a) die UV-Schutzglasschmelze (20) derart hergestellt wird,
dass 5 - 10 Gew.-%, insbesondere 6 - 10 Gew.-% K₂O, enthalten ist, und/oder
6.5) dass in Schritt c) das Glasprodukt (30) für eine Zeit t von 20 h ≤ t ≤ 40 h bei einer Temperatur T mit 580°C ≤ T ≤ 620°C temperiert wird.

7. Verfahren zur Herstellung eines Glasprodukts (30) aus UV-absorbierenden Glas, **gekennzeichnet durch**
Durchführen eines Verfahrens nach einem der voranstehenden Ansprüche so, dass das Glasprodukt zur Verwendung
7.1) als Bauglas, insbesondere Fensterglas,
7.2) als Fenster- oder Bauglas in religiösen Bauten, Museen, historischen Gebäuden und/oder in der Denkmalspflege,
7.3) zum Bau von Vitrinen oder Schaubehältern, insbesondere für Museen oder Ausstellungen, und/oder
7.4) als Lampenglas
geformt wird.

8. Verwendung eines durch ein Verfahren nach einem der voranstehenden Ansprüche erhaltenen Glasprodukts aus UV-absorbierenden Glas, **gekennzeichnet durch**
Durchführen eines Verfahrens nach einem der voranstehenden Ansprüche zum Herstellen des Glasprodukts und
Verwenden des Glasprodukts
8.1) als Bauglas, insbesondere Fensterglas,
8.2) als Fenster- oder Bauglas in religiösen Bauten, Museen, historischen Gebäuden und/oder in der Denkmalspflege,
8.3) zum Bau von Vitrinen oder Schaubehältern, insbesondere für Museen oder Ausstellungen, und/oder
8.4) als Lampenglas.

9. Glasprodukt, das ein UV-absorbierendes Glas aufweist, welches enthält:
| | | |
|---|---|---|
| SiO₂ | 55 - 75 | Gew.-%, |
| Na₂O | 0-18 | Gew.-% |
| CaO | 0-10 | Gew.-% |
| K₂O | 5-15 | Gew.-%, vorzugsweise 6 - 10 Gew.-%, |
| B₂O₃ | 1 - 7 | Gew.-%, |
| CdS | 0,05-0,5 | Gew.-%, |
| ZnS | 0,1 -0,4 | Gew.-%, und |
| ZnO | 4,5 - 12 | Gew.-%, |
**dadurch gekennzeichnet,**
**dass** das Glasprodukt ein durch ein Verfahren nach einem der Ansprüche 1 bis 7 erhaltenes Glasprodukt ist und dass das UV-absorbierende Glas eine Transmission mit einem Fußpunkt des Transmissionsspektrums, unterhalb dem es weniger als 0,1% Lichttransmission gibt, bei ca. 380 nm bis 420 nm, vorzugsweise kleiner 405 nm, hat,
und **dass** das Glasprodukt ein Überfangglas (66) enthält, welches das UV-absorbierende Glas und ein Klarglas als Basisglas (40) aufweist.

10. Verwendung eines Glasproduktes nach Anspruch 9:
10.1 als Bauglas;
10.2 als Fensterglas;
10.3 als Fenster- oder Bauglas in religiösen Bauten, Museen, historischen Gebäuden und/oder in der Denkmalspflege;
10.4 zum Bau von Vitrinen oder Schaubehältern, insbesondere für Museen oder Ausstellungen; oder
10.5 als Lampenglas.

## Claims

1. Method for producing a glass product (30) composed of UV absorbing glass, comprising the steps of:
a) producing a UV protection glass melt (20) containing:
| | | |
|---|---|---|
| SiO₂ | 55 - 75 | % by weight |
| Na₂O | 0 - 18 | % by weight |
| CaO | 0 - 10 | % by weight |
| K₂O | 5 - 15 | % by weight |
| B₂O₃ | 1 - 7 | % by weight |
| CdS | 0.05 - 0.5 | % by weight |
| ZnS | 0.1 - 0.4 | % by weight |
| ZnO | 4.5 - 12 | % by weight |
b) forming the glass product (30),
c) tempering the glass product (30) for a time t at a temperature T, where:
540°C ≤ T ≤ 750°C and 1h ≤ t ≤ 50h.

2. Method according to claim 1,
**characterized in that**
in step b) the glass product (30) is massively formed from the UV protection glass melt (20) produced in step a).

3. Method according to claim 2,
**characterized in that**
step b) comprises mouth blowing of the glass product (30), wherein in step b) a first quantity of glass (24) is first removed from the UV protection glass melt (20) and cooled and then a second quantity of glass (26) is removed from the UV protection glass melt (20) via the cooled first quantity of glass (24).

4. Method according to claim 1,
**characterized in that**
in step b) the glass product (30) is formed from casing glass (66) having at least one base glass layer (38) from a basic glass melt without UV absorbing properties and at least one UV protection glass layer (36) from the UV protection glass melt (20).

5. Method according to claim 4,
**characterized in that**
5.1 step b) is performed in such a way that the thickness of the UV protection glass layer (36) is at least 1.2 mm, in particular between approx. 1.2 mm and 3.0 mm, and preferably 1.6 mm and/or
5.2 a colorless clear glass, in particular a soda-lime glass, and/or a colored glass, is used as a basic glass (40) and/or
5.3 step b) comprises mouth blowing of the glass product (30), wherein in step b) a first quantity of glass (24) is first removed from the basic glass melt (20) and cooled and then a second quantity of glass (26) is removed from the UV protection glass melt (20) via the cooled first quantity of glass (24) made of basic glass.

6. Method according to one of the preceding claims,
**characterized in that**
6.1) step b) comprises: forming a sheet glass (32), in particular in the form of a glass pane, or
6.2) step b) comprises: shaping of a glass cylinder (56) or a curved glass shape;
and/or
6.3) in step b) a cylinder is initially formed by means of mouth blowing from which a sheet glass (32) is formed as a glass product (30), and/or
6.4) in step a) the UV protection glass melt (20) is produced in such a way that 5 - 10 % by weight, in particular 6 - 10 % by weight, of K₂O is contained,
and/or
6.5) in step c) the glass product (30) is tempered for a time t of 20 h ≤ t ≤ 40 h at a temperature T of 580°C ≤ T ≤ 620°C.

7. Method for producing a glass product (30) composed of UV absorbing glass, **characterized by**
performing a method according to any one of the preceding claims so that the glass product is formed for its use
7.1) as construction glass, especially window glass,
7.2) as window or construction glass in religious buildings, museums, historical buildings and/or in the preservation of historical monuments,
7.3) for the construction of showcases or display cases, in particular for museums or exhibitions, and/or
7.4) as lamp glass.

8. Use of a glass product from UV absorbing glass obtained by a method according to one of the preceding claims, **characterized by** carrying out a process according to any of the preceding claims to produce the glass product and using the glass product
8.1) as construction glass, especially window glass,
8.2) as window or construction glass in religious buildings, museums, historical buildings and/or in the preservation of historical monuments,
8.3) for the construction of showcases or display cases, in particular for museums or exhibitions, and/or
8.4) as lamp glass.

9. A glass product comprising a UV absorbing glass containing
| | | |
|---|---|---|
| SiO₂ | 55 - 75 | % by weight |
| Na₂O | 0 - 18 | % by weight |
| CaO | 0 - 10 | % by weight |
| K₂O | 5 - 15 | % by weight, preferably 6 - 10 % by weight |
| B₂O₃ | 1 - 7 | % by weight |
| CdS | 0.05 - 0.5 | % by weight |
| ZnS | 0.1 - 0.4 | % by weight |
| ZnO | 4.5 - 12 | % by weight |
**characterized in that**
the glass product is a glass product obtained by a method according to one of claims 1 to 7, and **in that** the UV absorbing glass has a transmission with a base point of the transmission spectrum below which there is less than 0.1% light transmission, at about 380 nm to 420 nm, preferably less than 405 nm,
and **in that** the glass product includes a casing glass (66) comprising the UV absorbing glass and a clear glass as basic glass (40).

10. Use of a glass product according to claim 9
10.1) as construction glass;
10.2) as window glass;
10.3) as window or construction glass in religious buildings, museums, historical buildings and/or in the preservation of historical monuments;
10.4) for the construction of showcases or display cases, in particular for museums or exhibitions; or
10.5) as lamp glass.

## Revendications

1. Procédé de fabrication d'un produit en verre (30) à partir de verre absorbant les UV, comprenant les étapes suivantes:
a) production d'une masse fondue de verre de protection contre les UV (20) contenant:
| | | |
|---|---|---|
| SiO₂ | 55 - 75 | % en poids |
| Na₂O | 0 - 18 | % en poids |
| CaO | 0-10 | % en poids |
| K₂O | 5-15 | % en poids |
| B₂O₃ | 1-7 | % en poids |
| CdS | 0,05-0,5 | % en poids |
| ZnS | 0,1 -0,4 | % en poids |
| ZnO | 4,5-12 | % en poids |
b) former le produit en verre (30),
c) tempérer le produit en verre (30) pendant un temps t à une température T, où:
540°C ≤ T ≤ 750°C et 1h ≤ t ≤ 50h.

2. Procédé selon la revendication 1,
**caractérisé en ce que**
à l'étape b), le produit en verre (30) est formé de manière massive à partir de la masse fondue de verre de protection contre les UV (20) produite à l'étape a).

3. Procédé selon la revendication 2,
**caractérisé en ce que**
l'étape b) comprend le soufflage à la bouche du produit en verre (30), à l'étape b), une première quantité de verre (24) étant d'abord retirée de la masse fondue de verre de protection contre les UV (20) et refroidie, puis une deuxième quantité de verre (26) étant retirée de la masse fondue de verre de protection contre les UV (20) via la première quantité de verre refroidie (24).

4. Procédé selon la revendication 1,
**caractérisé en ce que**
à l'étape b), le produit en verre (30) est formé de verre d'enveloppe (66) ayant au moins une couche de verre de base (38) à partir d'un verre fondu de base sans propriétés d'absorption des UV et au moins une couche de verre de protection contre les UV (36) à partir du verre fondu de protection contre les UV (20).

5. Procédé selon la revendication 4,
**caractérisé en ce que**
5.1 l'étape b) est effectuée de telle sorte que l'épaisseur de la couche de verre de protection contre les UV (36) soit d'au moins 1,2 mm, en particulier entre environ 1,2 mm et 3,0 mm, et de préférence 1,6 mm et/ou
5.2 un verre incolore transparent, en particulier un verre silicosodocalcique, et/ou un verre coloré, est utilisé comme verre de base (40) et/ou
5.3 l'étape b) comprend le soufflage à la bouche du produit en verre (30), à l'étape b), une première quantité de verre (24) étant d'abord retirée de la masse fondue de verre de base (20) et refroidie, puis une deuxième quantité de verre (26) est retirée de la masse fondue de verre de protection contre les UV (20) via la première quantité de verre refroidie (24) fait de verre de base.

6. Procédé selon l'une des revendications précédentes,
**caractérisé en ce que**
6.1) l'étape b) comprend: la formation un verre plat (32), en particulier sous la forme d'un panneau de verre, ou
6.2) l'étape b) comprend: la mise en forme d'un cylindre de verre (56) ou d'une forme courbe en verre;
et/ou
6.3) à l'étape b), un cylindre est d'abord formé par soufflage à la bouche, à partir duquel un verre plat (32) est formé en tant que produit en verre (30),
et/ou
6.4) à l'étape a), la masse fondue de verre de protection contre les UV (20) est produite de manière à contenir 5 à 10 % en poids, en particulier 6 à 10 % en poids, de K₂O,
et/ou
6.5) à l'étape c), le produit en verre (30) est tempéré pendant une durée t de 20 h ≤ t ≤ 40 h à une température T de 580°C ≤ T ≤ 620°C.

7. Procédé de fabrication d'un produit en verre (30) composé de verre absorbant les UV, **caractérisé par**
la mise en oeuvre d'un procédé selon l'une des revendications précédentes de manière à ce que le produit en verre soit formé pour son utilisation
7.1) comme verre de construction, en particulier le verre de fenêtre,
7.2) comme vitrage ou verre de construction dans les édifices religieux, les musées, les bâtiments historiques et/ou dans la préservation des monuments historiques,
7.3) pour la construction de vitrines ou de présentoirs, en particulier pour des musées ou des expositions, et/ou
7.4) comme verre de lampe.

8. Utilisation d'un produit en verre à partir de verre absorbant les UV obtenu par un procédé selon l'une des revendications précédentes, **caractérisé par**
la réalisation d'un procédé selon l'une des revendications précédentes pour produire le produit en verre et l'utilisation du produit en verre
8.1) comme verre de construction, en particulier le verre de fenêtre,
8.2) comme vitrage ou verre de construction dans les édifices religieux, les musées, les bâtiments historiques et/ou dans la préservation des monuments historiques,
8.3) pour la construction de vitrines ou de présentoirs, en particulier pour des musées ou des expositions, et/ou
8.4) comme verre de lampe.

9. Un produit en verre comprenant un verre absorbant les UV contenant
| | | |
|---|---|---|
| SiO₂ | 55 - 75 | % en poids |
| Na₂O | 0 - 18 | % en poids |
| CaO | 0 - 10 | % en poids |
| K₂O | 5 - 15 | % en poids, en particulier 6 - 10 % en poids, |
| B₂O₃ | 1 - 7 | % en poids |
| CdS | 0,05 - 0,5 | % en poids |
| ZnS | 0,1 - 0,4 | % en poids |
| ZnO | 4,5 - 12 | % en poids |
**caractérisé en ce que**
le produit en verre est un produit en verre obtenu par un procédé selon l'une des revendications 1 à 7, et **en ce que** le verre absorbant les UV présente une transmission avec un point de base du spectre de transmission en dessous duquel il y a moins de 0,1% de transmission de la lumière, à environ 380 nm à 420 nm, de préférence moins de 405 nm, et **en ce que** le produit en verre comprend un verre d'enveloppe (66) comprenant le verre absorbant les UV et un verre clair comme verre de base (40).

10. Utilisation d'un produit en verre selon la revendication 9
10.1) comme verre de construction;
10.2 comme vitrage;
10.3) comme vitrage ou verre de construction dans les édifices religieux, les musées, les bâtiments historiques et/ou dans la préservation des monuments historiques;
10.4) pour la construction de vitrines ou de présentoirs, en particulier pour des musées ou des expositions; ou
10.5) comme verre de lampe.
